Europäisches Patentamt

European Patent Office

Office européen des brevets

(19)

(11) Publication number : **0 458 481 B1**

(12) **EUROPEAN PATENT SPECIFICATION**

(45) Date of publication of patent specification :
05.07.95 Bulletin 95/27

(51) Int. Cl.⁶ : **G03G 7/00**

(21) Application number : **91303975.6**

(22) Date of filing : **02.05.91**

(54) Polymeric film.

(30) Priority : **14.05.90 GB 9010755**

(43) Date of publication of application :
**27.11.91 Bulletin 91/48**

(45) Publication of the grant of the patent :
**05.07.95 Bulletin 95/27**

(84) Designated Contracting States :
**BE CH DE ES FR GB IT LI NL**

(56) References cited :
**EP-A- 0 332 183
AU-A- 521 878
DE-A- 2 454 047
DE-A- 2 844 691
US-A- 4 168 338
DATABASE WPIL, no. 83-709073 Derwent
Publications Ltd., London, GB, &
JP-A-58095747 (TEIJIN K.K.)**

(73) Proprietor : **IMPERIAL CHEMICAL
INDUSTRIES PLC
Imperial Chemical House,
Millbank
London SW1P 3JF (GB)**

(72) Inventor : **Lever, Philip Eugene
20 Lavenham Road
Ipswich, Suffolk (GB)**
Inventor : **Page, Darrin John
36 Broomfield Crescent
Wivenhoe, Colchester, Essex (GB)**

(74) Representative : **Millross, Christopher Robert
et al
Intellectual Property Department
ICI Materials
P.O. Box 90
Wilton
Middlesbrough, Cleveland TS90 8JE (GB)**

## Description

This invention relates to a polymeric film, and in particular to a multilayer polymeric film.

It is known to produce rough surface films by the application of a lacquer containing a finely divided particulate material, as disclosed in British Patent Specification GB-A-1059073. The presence of particulate materials in the surface region of the lacquer layer renders the film receptive to marking with drafting instruments, such as pencils. However, such drafting films often have poor ink-take properties and therefore it is usually necessary to apply an additional ink-receptive layer over the lacquer layer. The ink-receptive layer suitably comprises any polymeric or copolymeric material which is capable of firmly retaining ink markings, such as polyvinyl butyral, polyvinyl alcohol or polyvinyl acetate. The aforementioned films are also used in photocopying machines and there is a need therefore for these films to exhibit good toner adhesion. Unfortunately, prior art drafting films which have good pencil- and ink-receptivity have poor toner adhesion. We have now surprisingly devised a multilayer film which is suitable for use as a drafting film and which exhibits excellent toner adhesion.

Accordingly, the present invention provides a multilayer film comprising a substrate layer of polymeric material having on at least one surface thereof a lacquer layer of polymeric material different from that of the substrate, the remote surface of said lacquer layer having a toner-receptive layer, wherein the lacquer layer comprises finely divided particles and the toner-receptive layer comprises a copolymer comprising styrene and/or a styrene derivative, and at least one ethylenically unsaturated comonomer copolymerisable therewith, the copolymer containing at least one free functional acid group, and wherein the toner receptive layer has a thickness of not more than 2.5μm.

The invention also provides a method of producing a multilayer film by forming a substrate layer of polymeric material, applying to at least one surface thereof a lacquer layer of polymeric material different from that of the substrate, and applying to the remote surface of said lacquer layer a toner-receptive layer, wherein the lacquer layer comprises finely divided particles and the toner-receptive layer comprises a copolymer comprising styrene and/or a styrene derivative, and at least one ethylenically unsaturated comonomer copolymerisable therewith, the copolymer containing at least one free functional acid group, and wherein the toner receptive layer has a thickness of not more than 2.5μm.

The finely divided particles in the lacquer layer impart a surface roughness to the film surface which can be marked and will retain the impressions of writing implements such as pencils, crayons and ink, the thickness of the toner layer being such that the rough characteristics of the lacquer layer, and hence the writability, are not masked. Preferably, the thickness of the toner receptive layer is 0.1 to 2 μm, more preferably 0.5 to 1.5 μm.

British Patent Specification GB-A-2007694 discloses a toner receptive layer containing similar materials but makes no reference to a lacquer layer.

A substrate for use in the production of a multilayer film according to the invention suitably comprises any polymeric material capable of forming a self-supporting opaque, or preferably transparent, film or sheet.

By a "self-supporting film or sheet" is meant a film or sheet capable of independent existence in the absence of a supporting base.

Suitable thermoplastics materials for use in the production of a substrate include a cellulose ester, eg cellulose acetate, polystyrene, a polymer and copolymer of vinyl chloride, polysulphone, a homopolymer or copolymer of a 1-olefin, such as ethylene, propylene and but-1-ene, a polyamide, a polycarbonate, and, particularly, a synthetic linear polyester which may be obtained by condensing one or more dicarboxylic acids or their lower alkyl (up to 6 carbon atoms) diesters, eg terephthalic acid, isophthalic acid, phthalic acid, 2,5- 2,6- or 2,7-naphthalenedicarboxylic acid, succinic acid, sebacic acid, adipic acid, azelaic acid, 4,4′-diphenyldicarboxylic acid, hexahydroterephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. A polyethylene terephthalate film is particularly preferred, especially such a film which has been biaxially oriented by sequential stretching in two mutually perpendicular directions, typically at a temperature in the range 70 to 125°, and preferably heat set, typically at a temperature in the range 150 to 250°, for example as described in GB-A-838708.

The substrate may also comprise a polyarylether or thio analogue thereof, particularly a polyaryletherketone, polyarylethersulphone, polyaryletheretherketone, polyaryletherethersulphone, or a copolymer or thioanalogue thereof. Examples of these polymers are disclosed in EP-A-1879, EP-A-184458 and US-A-4008203, particularly suitable materials being those applied to films which are sold by ICI PLC under the Registered Trade Mark STABAR. Blends of these polymers may also be employed.

Suitable thermoset resin substrate materials include addition - polymerisation resins - such as acrylics, vinyls, bis-maleimides and unsaturated polyesters, formaldehyde condensate resins - such as condensates with urea, melamine or phenols, cyanate resins, functionalised polyesters, polyamides or polyimides.

The polymeric film substrate for production of a multilayer film according to the invention may be unoriented, or uniaxially oriented, but is preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics substrate material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

The substrate is suitably of a thickness from 25 to 300, particularly from 50 to 175, and especially from 50 to 125 μm.

The lacquer layer of a film according to the invention comprises any suitable resin which is sufficiently adherent to the substrate that its adhesion is not weakened or destroyed by the abrasive effect of drafting instruments drawn across its surface. Suitable resins may be chosen from polyvinyl acetal resins, copolymers of vinylidene chloride especially such copolymers with acrylonitrile, cellulosic esters and copolymers of acrylic and methacrylic acid and glycidyl and lower alkyl (up to six carbon atoms) esters of such acids, especially such acrylic and methacrylic copolymers that are capable of external or internal cross-linking, such as those containing cross-linkable functional groups, eg hydroxyl, carboxyl, amide, oxirane, amine, nitrile, epoxy and trihydroxy silyl groups.

The lacquer layer preferably comprises one or more polyvinyl acetal resins. Polyvinyl acetal resins can be suitably prepared by reacting polyvinyl alcohols with aldehydes. Commercially available polyvinyl alcohols are generally prepared by hydrolysing polyvinyl acetate. Polyvinyl alcohols are usually classified as partially hydrolysed (comprising 15 to 30% polyvinyl acetate groups) and completely hydrolysed (comprising 0 to 5% polyvinyl acetate groups). Both types of polyvinyl alcohols, in a range of molecular weights, are used in producing commercially available polyvinyl acetal resins. The conditions of the acetal reaction and the concentration of the particular aldehyde and polyvinyl alcohol used will determine the proportions of hydroxyl groups, acetate groups and acetal groups present in the polyvinyl acetal resin. The hydroxyl, acetate and acetal groups are generally randomly distributed in the molecule. Suitable polyvinyl acetal resins include polyvinyl butyral, and preferably polyvinyl formal.

The weight average molecular weight of the polyvinyl acetal resin can vary over a wide range, but is preferably from 5,000 to 100,000, and particularly from 10,000 to 70,000, and especially from 10,000 to 40,000.

The finely divided particulate material may be selected from silica, silicates, ground glass, chalk, talc, diamotaceous earth, magnesium carbonate, zinc oxide, zirconia, calcium carbonate and titanium dioxide. Finely divided silica is the preferred material for the production of drafting materials, together with which smaller quantities of the other materials may be incorporated, to obtain the required degree of translucency and to increase the toughness and mark resistance of the coating. Desirably, a filler, if employed in a lacquer layer, should be present in an amount of not exceeding 50% by weight of polymeric material, and the average particle size thereof should not exceed 15 μm, preferably less than 10 μm, and especially from 0.1 to 5 μm.

The lacquer layer is preferably applied to the polymeric film substrate as a solution in an organic solvent by any suitable conventional technique such as dip coating, bead coating, reverse roller coating or slot coating.

The resin coating medium of the lacquer layer may be applied before, during or after the stretching operation in the production of an oriented film. The lacquer layer coating medium may, for example, be applied to the film substrate between the two stages (longitudinal and transverse) of a thermoplastics film biaxial stretching operation. Such a sequence of stretching and coating is suitable for the production of a coated linear polyester film substrate, such as a coated polyethylene terephthalate film, which is preferably firstly stretched in the longitudinal direction over a series of rotating rollers, coated with the lacquer layer, and then stretched transversely in a stenter oven, preferably followed by heat setting. The lacquer layer is preferably applied after the stretching operation, particularly to a biaxially oriented film substrate, such as polyethylene terephthalate.

A preferred lacquer layer comprises a polyvinyl formal resin comprising approximately 5.0 to 6.5% hydroxyl content (expressed as % polyvinyl alcohol), approximately 9.5 to 13% acetate content (expressed as % polyvinyl acetate), and the balance ie to 100%, being formal content (expressed as % polyvinyl formal). The weight average molecular weight of the polyvinyl formal resin is preferably from 10,000 to 40,000.

The ratio of substrate to lacquer layer thickness may vary within a wide range, although the thickness of the lacquer layer preferably should not be less than 5% nor greater than 20% of that of the substrate. In practice, the thickness of the lacquer layer is desirably at least 2 μm, preferably 3 μm and preferably should not greatly exceed about 20 μm and preferably 15 μm.

Prior to deposition of the lacquer layer onto the polymeric substrate the exposed surface thereof may, if desired, be subjected to a chemical or physical surface-modifying treatment to improve the bond between that surface and the subsequently applied lacquer resin layer. A preferred treatment, because of its simplicity and effectiveness, which is particularly suitable for the treatment of a polyolefin substrate, is to subject the exposed surface of the substrate to a high voltage electrical stress accompanied by corona discharge. Alternatively, the substrate may be subjected to flame treatment or ultra-violet light. The pretreatment may involve coating the film surface with an agent known in the art to have a solvent, swelling or oxidising action on the substrate polymer. When the substrate film is a linear polyester, such as polyethylene terephthalate, the pretreatment may involve the application to the film surface of a material having a swelling or solvent action upon the film, eg a solution in a common organic solvent such as acetone or methanol of p-chloro-m-cresol, 2,4-dichlorophenol, 2,4,6- or 2,4,5-trichlorophenol or 4-chlororesorcinol, or a mixture of such materials in a common organic solvent. If desired, the pretreating solution may contain a polymeric component, eg a copolymer of vinyl chloride and vinyl acetate, especially a copolymer comprising approximately 90 wt % of vinyl chloride and 4 wt % vinyl acetate with a hydroxyl content of 2.3 wt %. After such a solution has been applied to the film surface it may be dried at an elevated temperature for a few minutes before applying the lacquer layer.

Alternatively, the substrate may be coated with an adhesion-promoting layer to which the lacquer layer may be applied. Suitable layers include polymers and copolymers of acrylic and methacrylic acids and their esters, and copolymers of vinylidene chloride. A particularly preferred adherent layer comprises a polyester resin containing free sulphonate groups as described in our copending GB Patent Application No 8922693.0, which is incorporated herein by reference. Suitable sulphonated polycarboxylic acids for incorporation into the polyester resin include the ammonium and alkali metal, particularly sodium, salts of 4-sulphophthalic acid, 5-sulpho-isophthalic acid and sulphoterephthalic acid, or the acid anhydrides or lower alkyl (up to 10 carbon atoms) esters thereof. Unsulphonated polycarboxylic acids suitable for incorporation into the polyester resin include phthalic acid, isophthalic acid, terephthalic acid, cyclohexane-1,4-dicarboxylic acid, adipic acid, sebacic acid, trimellitic acid and itaconic acid, or the acid anhydrides or lower alkyl (up to 10 carbon atoms) esters thereof. Suitable polyhydric alcohols for incorporation into the polyester resin include aliphatic and cycloaliphatic alkylene glycols, such as ethylene glycol, 1,2-propylene glycol, neopentyl glycol, cyclohexane-1,4-dimethanol and 1,3-propane diol, and particularly aliphatic alkylene-oxy-glycols, such as diethylene glycol.

The concentration of the unsulphonated, preferably aromatic, polycarboxylic component in the polyester resin is preferably within a range of from 60 to 98 mole %, more preferably from 80 to 98 mole % and particularly from 88 to 94 mole %, of the total acidic components of the resin, while the sulphonic acid component is preferably present in a concentration of from 2 to 40 mole %, more preferably 2 to 20 mole %, particularly from 6 to 12 mole %, of the total acidic components of the resin. The polyhydric alcohol is correspondingly present in a stoichiometrically equivalent amount of approximately 100 mole %. A preferred polyester resin comprises residues of isophthalic acid, a sulphonic acid derivative of isophthalic and/or terephthalic acid, and diethylene glycol.

The polyester resin may additionally comprise at least one aliphatic or cycloaliphatic dicarboxylic acid, such as cyclohexane-1,4-dicarboxylic acid, adipic acid, sebacic acid, trimellitic acid or itaconic acid, or polyester-forming equivalents thereof. The optional aliphatic or cycloaliphatic dicarboxylic acid components may be present in an amount of up to about 38 mole %, preferably from 0 to 6 mole %, of the total acidic components of the polyester resin.

If desired, and preferably, the polyester resin may be cross-linked to improve its durability, hardness, cohesive strength and adhesion to the substrate, resistance to attack by solvents, and particularly to prevent blocking of the film. The cross-linking agent may comprise up to 100%, and preferably greater than 30% and less than 80%, and particularly from 40 to 75%, especially 45 to 55% by weight of the sulphonated polyester resin.

The polyester resin coating medium may be applied to an already oriented film substrate - such as a polyimide film. However, application of the coating medium is preferably effected before or during the stretching operation, and particularly between the two stages (longitudinal and transverse) of a thermoplastics film biaxial stretching operation.

The toner-receptive layer of the present invention is applied over the lacquer layer to improve the susceptibility of the film to toner markings.

The toner-receptive layer comprises a styrene and/or styrene derivative copolymer (hereinafter referred to as a styrene copolymer) which contains at least one free acid group, that is a group other than those involved in the polymerisation reaction by which the copolymer is formed.

The styrene copolymers which are used in the toner-receptive layer according to this invention are generally water-insoluble.

Styrene derivatives suitable for the production of the toner-receptive copolymer preferably comprise chloro

EP 0 458 481 B1

styrene, hydroxy styrene and alkylated styrenes, wherein the alkyl group contains from one to ten carbon atoms.

Styrene derivative comonomers can be employed to provide the copolymer with at least one free functional acid group, for example, small copolymerised proportions of a styrene derivative comprising at least one free functional sulphonic acid group. Such copolymers may contain at least one other non-sulphonated styrene and/or styrene derivative.

Copolymers of styrene and/or styrene derivatives comprise one or more other ethylenically unsaturated comonomers which are copolymerisable therewith. Suitable comonomers may be selected from $\alpha$, $\beta$-unsaturated carboxylic acids, such as acrylic and methacrylic acids and their esters and amides, including alkyl esters in which the alkyl group contains up to ten carbon atoms, eg methyl, ethyl, propyl, isopropyl, butyl, hexyl, heptyl, n-octyl and 2-ethylhexyl groups, butadiene, acrylonitrile, vinyl esters, such as vinyl acetate, vinyl chloroacetate, vinyl benzoate, vinyl pyridine and vinyl chloride, vinylidene chloride, maleic acid and anhydride, and itaconic acid and anhydride.

Ethylenically unsaturated comonomers can be employed to provide the free functional acid groups of the styrene copolymer. For example small copolymerised proportions of acrylic acid, methacrylic acid, maleic acid and particularly itaconic acid eg up to about 20 mole % may be employed without rendering the copolymer water soluble. The styrene copolymer preferably comprises 1 to 15, more preferably 3 to 10, and especially 4 to 6 mole % of comonomers comprising free functional acid groups. Such copolymers may contain other ethylenically, unsaturated comonomers which do not contain free functional acid groups. The free functional acid groups present in the styrene copolymer are preferably carboxyl groups.

A particularly preferred styrene copolymer is derived from the monomers styrene/butyl acrylate/itaconic acid, preferably in a ratio of 60 to 80:15 to 35:1 to 15, and especially 67 to 73:22 to 28:4 to 6 mole %.

The toner-receptive layer preferably comprises an additional acrylic and/or methacrylic polymer (hereinafter referred to as acrylic polymer), which improves the receptivity of the layer to ink markings. The acrylic polymer may be polyacrylic acid, but preferably comprises an ester of acrylic acid or methacrylic acid, especially an alkyl ester where the alkyl group contains up to ten carbon atoms such as methyl, ethyl, n-propyl, isopropyl, n-butyl, isobutyl, terbutyl, hexyl, 2-ethyl, hexyl, heptyl, and n-octyl. Copolymers derived from an alkyl acrylate, especially ethyl acrylate, together with an alkyl methacrylate are preferred. Copolymers comprising an alkyl acrylate, eg ethyl acrylate or butyl acrylate, together with an alkyl methacrylate, eg methyl methacrylate are particularly preferred.

Other comonomers which are suitable for use in the preparation of the acrylic polymer which may be copolymerised as optional additional comonomers together with acrylic acid or methacrylic acid or esters of the acids include acrylonitrile, methacrylonitrile, halo-substituted acrylonitrile, halo-substituted methacrylonitrile, acrylamide, methacrylamide, N-methylol acrylamide, N-ethanol acrylamide, N-propanol acrylamide, N-methylol methacrylamide, N-ethanol methacrylamide, N-methyl acrylamide, N-tertiary butyl acrylamide, hydroxyethyl methacrylate, glycidyl acrylate, glycidyl methacrylate, dimethylamino ethyl methacrylate, itaconic acid, itaconic anhydride and half esters of itaconic acid.

The adhesion of the acrylic polymer layer to the lacquer layer may be modified by including one or more comonomers having cross-linkable functional groups in the comonomeric recipe for the formation of the acrylic copolymer. Epoxy group-containing comonomers, such as glycidyl acrylate and glycidyl methacrylate, are effective in providing internal cross-linking within the acrylic layer and possibly lacquer layer. A comonomeric amount of 5 to 25 mole %, preferably 15 to 25 mole %, of glycidyl acrylate or glycidyl methacrylate is effective in providing the desired adhesion properties.

Other optional comonomers include vinyl esters such as vinyl acetate, vinyl chloroacetate and vinyl benzoate, vinyl pyridine, vinyl chloride, vinylidene chloride, maleic acid, maleic anhydride, butadiene, styrene and derivatives of styrene such as chloro styrene, hydroxy styrene and alkylated styrenes.

The styrene copolymer/acrylic polymer ratio present in the toner-receptive layer is preferably 0.1 to 10:1.0, more preferably 0.5 to 2.0:1.0, and particularly 0.8 to 1.5:1.0 wt %.

Conventional additives may be included in the toner-receptive layer, eg adhesion promoters, such as a partially hydrolysed vinyl acetate/vinyl chloride copolymer optionally admixed with a chlorinated phenol, slip and particularly anti-static agents. A wide range of antistatic agents may be used, and particularly ammonium salts of styrene sulphonic acid. The concentration of the antistatic agent present in the final toner-receptive layer is preferably 2 to 15, and especially 6 to 10 wt %.

If desired, the toner-receptive composition may contain a cross-linking agent which functions to cross-link the polymer(s) thereby improving adhesion to the lacquer layer. Additionally, the cross-linking agent should preferably be capable of internal cross-linking in order to provide protection against solvent penetration. Suitable cross-linking components may comprise epoxy resins, alkyd resins, amine derivatives such as hexamethoxymethyl melamine, and/or condensation products of an amine, eg melamine, diazine, urea, cyclic ethylene

5

urea, cyclic propylene urea, thiourea, cyclic ethylene thiourea, alkyl melamines, aryl melamines, benzoguanamines, guanamines, alkyl guanamines and aryl guanamines with an aldehyde, eg formaldehyde. A useful condensation product is that of melamine with formaldehyde. The condensation product may optionally be alkoxylated. The cross-linking agent may be used in amounts of up to 25% by weight based on the weight of the polymer in the adherent composition.

A catalyst is also preferably employed to facilitate cross-linking. Preferred catalysts for cross-linking melamine formaldehyde include ammonium chloride, ammonium nitrate, ammonium thiocyanate, ammonium dihydrogen phosphate, ammonium sulphate, diammonium hydrogen phosphate, para toluene sulphonic acid, maleic acid stabilised by reaction with a base, and morpholinium para toluene sulphonate.

The toner-receptive layer is preferably applied to the lacquer layer as a dispersion or solution in an aqueous, or preferably organic solvent, eg methanol, by any suitable conventional technique such as dip coating, bead coating, reverse roller coating or slot coating. The toner-receptive coating composition may be applied before, during or after the stretching operation in the production of an oriented film. The toner-receptive layer may, for example, be applied to the film substrate between the two stages (longitudinal and transverse) of a thermoplastics film biaxial stretching operation. The toner-receptive layer is preferably applied after the film stretching operation.

The layers of a multilayer film according to the invention may conveniently contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate, lacquer, toner-receptive layer(s), and/or optional adhesion-promoting layer(s), as appropriate.

The invention is illustrated by reference to the accompanying drawings in which :

Figure 1 is a schematic sectional elevation, not to scale, of a multilayer film having a substrate, lacquer and toner-receptive layers.

Figure 2 is a similar schematic elevation of a polymeric film with an additional adhesion-promoting layer inbetween the substrate and lacquer layer.

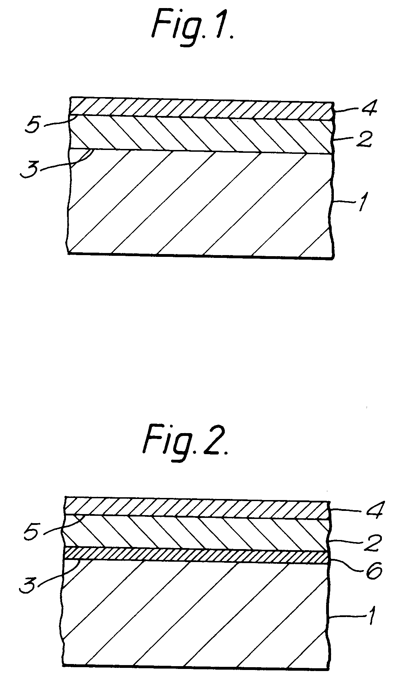

Referring to Figure 1 of the drawings, the film comprises a polymeric substrate layer (1) having a lacquer layer (2) bonded to one surface (3) thereof, and a toner-receptive layer (4) bonded to the remote surface (5) of the lacquer layer.

The film of Figure 2 further comprises an additional layer, an adhesion-promoting layer (6), in between the substrate (1) and the lacquer layer (2).

The invention is further illustrated by reference to the following examples. The tests used in the examples were as follows:

Toner removal: Measured using a "SELLOTAPE" adhesive tape adhesion test. The coated film was passed through a Xerox 1048 photocopier in order to adhere toner to the surface of the film. "SELLOTAPE" adhesive tape was evenly pressed onto toner-coated film and rapidly pulled off. Pressing on and pulling off of the tape was repeated 7 times. The results are expressed as the amount of toner removed as a percentage of the toner initially on the film ie < 5% represents very good toner adhesion.

Toner lift: Film was treated with toner, as described for the toner removal test, and creased. The maximum width of the line resulting from the crease was measured. A line of maximum width less than 0.5 mm indicates acceptable low toner lift, whilst a width of 0.3 mm or less is preferred.

Ink removal: A 1 cm Rotring Standard ink square was drawn on the film surface and allowed to dry at room temperature for more than 3 hours. "SELLOTAPE" adhesive tape was applied over the ink and removed. The application and removal of the tape was repeated 9 times. The ink removal is expressed as the percentage of the ink square removed after 10 applications of the adhesive tape.

Example 1 A polyethylene terephthalate film was melt extruded, cast onto a cooled rotating drum and stretched in the direction of extrusion to approximately 3 times its original dimensions. The film was passed into a stenter oven, where the film was stretched in the sideways direction to approximately 3 times its original dimensions. The biaxially stretched coated film was heat set at a temperature of about 220°C by conventional means. Final film thickness was 100 μm.

The biaxially oriented polyethylene terephthalate film was coated on both sides with a priming mixture of the following components:

| | |
|---|---|
| p-Chloro-m-cresol | 3.75 g |

VAGH                                                      0.75 g

(copolymer of vinyl chloride/vinyl acetate
in a ratio of 90:4 wt %, having a 2.3 wt %
hydroxyl content, and a weight average
molecular weight of 23,000
- supplied by Union Carbide)

Acetone - added to give a final volume of -         100 ml

After coating, the film was dried in a hot air oven maintained at 100°C to yield a film having a dry coat thickness for each primer layer of approximately 0.2 μm.

The pre-treated polyethylene terephthalate film was then coated on both sides with a lacquer composition comprising the following components:

TRIKLONE                                            605.7 ml

(Trichloroethylene
- supplied by ICI)

Methanol                                            75.7 ml

Diacetone alcohol                              64.4 ml

| | |
|---|---|
| FORMVAR 15/95E | 90 g |
| (Polyvinyl formal resin, 68.5% solids | |
| - supplied by Monsanto) | |
| | |
| RCR3 | 1.6 g |
| (Titanium dioxide | |
| - supplied by Tioxide) | |
| | |
| SYLOID 244 | 10 g |
| (Silica of average particle size 2μm (determined | |
| by Coulter Counter), 7.3% solids | |
| - supplied by Grace Chemicals) | |
| | |
| GASIL 200 DF | 30 g |
| (Silica of average particle size 4.6μm (determined | |
| by Malvern), 22.8% solids | |
| - supplied by Crossfield Chemicals) | |

The coated film was dried at 100 to 120°C, and the combined dry coat weight of the two lacquer layers was approximately 155 mgdm$^{-2}$. The thickness of each lacquer layer was approximately 7 to 9 μm.

The lacquer layer coated film was additionally coated on both sides with a toner-receptive composition comprising the following components:

| | |
|---|---|
| Styrene/butyl acrylate/itaconic acid | 10 ml |
| copolymer in a ratio of 70:25:5 mole %, | |
| 25 % solids | |
| | |
| Methanol | 300 ml |

The coated films were dried at 100°C, and the dry coat thickness of each toner-receptive layer was less than 1 μm.

The toner removal and toner lift properties of the above coated film were assessed, as described above, with the results given in Table 1.

Example 2

This is a comparative Example not according to the invention. The procedure in Example 1 was repeated except that the toner-receptive layer coating stage was omitted.

The lacquer layer coated film was assessed for toner removal and toner lift properties and the results are given in Table 1.

The coated film was also assessed for ink removal properties and the results are given in Table 2.

Example 3

The procedure of Example 1 was repeated except that the toner-receptive composition additionally comprised 1.3 ml of VERSA TL 125 (30% solids, supplied by National Starch and Chemical Ltd, UK). VERSA TL 125 is an antistatic agent and comprises an ammonium salt of styrene sulphonic acid.

The toner removal and toner lift properties of the coated film were assessed and the results are given in Table 1.

Example 4

The procedure of Example 1 was repeated except that instead of using the priming mixture containing VAGH the biaxially oriented polyethylene terephthalate film was coated on both sides with an aqueous composition containing the following components:

```
EASTMAN WD Size                                        417 ml

(a 30% by weight aqueous dispersion of a

polyester of isophthalic acid,

sulphoisophthalic acid and diethylene glycol)


LUDOX TM                                                  4 g

(a 50% by weight aqueous dispersion of

colloidal silica of mean particle size 22 nm

- supplied by Du Pont)


SYNPERONIC N                                            16 g

(a 27% by weight aqueous solution of a

nonyl phenol ethoxylated surfactant

- supplied by ICI)


CYMEL 300                                              625 ml

(a 10% by weight aqueous mixture of



melamine formaldehyde resin)


Ammonium p-toluene sulphonic acid                      125 ml

(a 10% by weight aqueous solution)
```

Water-added to give a coating composition of total volume 2.5 litres.

The pH of the composition was adjusted to approximately 8.5 to 9.5 by the addition of ammonia, before the addition of the LUDOX TM colloidal silica.

The polyethylene terephthalate film was coated to give a wet coating thickness of approximately 3 μm on each side.

The pre-treated polyethylene terephthalate was then coated with the lacquer and toner-receptive layers as described in Example 1.

The coated film was assessed for toner removal and toner lift properties and the results are given in Table 1.

Example 5

The procedure of Example 1 was repeated except that the toner-receptive composition additionally comprised the following component:

```
VISCALEX PL30                                              6 ml
(an acrylic copolymer, 30% solids
- supplied by Allied Colloids)
```

The coated film was assessed for toner removal and toner lift properties and the results are given in Table 1.

The coated film was also assessed for ink removal properties and the results are given in Table 2.

Example 6

A polyethylene terephthalate film was melt extruded, cast onto a cooled rotating drum and stretched in the direction of the extrusion to approximately 3 times its original dimensions. The film was then coated on one side with a pre-treating mixture of the following components:

```
An aqueous solution comprising an aqueous            454 ml
latex of methyl methacrylate / ethyl acrylate
/ methacrylamide in a ratio of 46:46:8 weight %


and methoxylated melamine formaldehyde. (This
solution had a solids content of 14 %).


SYNPERONIC N                                          6 ml
(a 27% by weight aqueous solution of a
nonyl phenol ethoxylated surfactant
- supplied by ICI)


Aqueous ammonium nitrate solution (35 w/w%)          5 ml
```

The balance of the composition was demineralised water to give a total volume of 2.12 litres.

After this coating, the film was passed into a stenter oven, where the film was stretched in the sideways direction to approximately 3 times its original dimensions. The film was then heat set at a temperature of about 230°C by conventional means to provide a film thickness of 100 μm with a primer layer thickness of approximately 0.02 μm.

The pre-treated polyethylene terephthalate film was coated on the primer layer side with a lacquer composition comprising the following components:

DYNOMIN MB-98-E                                     1.04g

(a glycol uryl-supplied by Dyno Cyanamid)          (5% by weight

                                                   based on VAGF)


Magnesium Bromide                                  0.235g

                                                   (10% by weight

                                                   based on DYNOMIN)


VAGF                                               20g

(a copolymer of vinyl chloride/vinyl acetate

in a ratio of 81:4 % by weight, having a 1.8% by

weight hydroxyl content - supplied

by Union Carbide)


GASIL 200 DF                                       10g


    (silica of average particle size 4.6µm (determined

    by Malvern), 22.8% solids

    - supplied by Crossfield Chemicals)


RTC 90                                             0.2g

(titanium dioxide - supplied by Tioxide)


TIXOGEL                                            1g

(a thixotropic and anti-settling agent

- supplied by Sud-Chemie)


Methylethylketone                                 145 ml

   The coated film was dried at 100 to 120°C, and the combined dry coat weight of the two lacquer layers was approximately 155 mgdm$^{-2}$. The thickness of each lacquer layer was approximately 7 to 9 µm.

   The lacquer layer coated film was coated on both sides with a toner-receptive composition comprising the following components:

```
Styrene/butyl acrylate/itaconic acid copolymer          10 ml
in a ratio of 70:25:5 mole %, 25 % solids


Methanol                                                300 ml


VISCALEX PL30                                           6 ml
(an acrylic copolymer, 30% solids
- supplied by Allied Colloids)


VERSA TL 125                                            1.3 ml
 (an antistatic agent comprising an ammonium
salt of styrene sulphonic acid (30% solids)
- supplied by National Starch and Chemical Ltd, UK)
```

The coated films were dried at 100°C, and the dry coat thickness of each toner-receptive layer was less than 1 µm.

The toner removal and toner lift properties of the above coated film were assessed, as described above, with the results given in Table 1.

Example 7

The procedure of Example 1 was repeated except that the toner-receptive composition comprised the following components:

```
Styrene/butyl acrylate/itaconic acid copolymer          10 ml
in a ratio of 70:25:5 mole %, 25 % solids


Methanol                                                300 ml


VISCALEX PL30                                           6 ml
 (an acrylic copolymer, 30% solids
 - supplied by Allied Colloids)


VERSA TL 125                                            1.3 ml
(an antistatic agent comprising an ammonium
salt of styrene sulphonic acid (30% solids)
- supplied by National Starch and Chemical Ltd, UK)
```

The coated film was assessed for toner removal and toner lift properties and the results are given in Table 1.

XEROX 1048, VAGH, TRIKLONE, FORMVAR 15/95E, RCR3, SYLOID 244, GASIL 200DF, VERSA TL 125, EASTMAN WD, LUDOX TM, SYNPERONIC N, CYMEL 300, VISCALEX PL30, DYNOMIN MB-98-E, VAGF, and TIXOGEL are trade marks of the suppliers indicated.

## TABLE 1

| EXAMPLE NO | TONER REMOVAL % | TONER LIFT Maximum Width in mm |
|---|---|---|
| 1 | < 5% | 0.3 |
| 2 (Comparative) | > 95% | > 1 |
| 3 | 25% | 0.3 |
| 4 | < 5% | 0.3 |
| 5 | < 5% | 0.3 |
| 6 | <10% | 0.8 |
| 7 | <10% | 0.7 |

## TABLE 2

| EXAMPLE NO | INK REMOVAL % |
|---|---|
| 2 (Comparative) | > 95% |
| 5 | < 5% |

The above examples illustrate the improved properties of multilayer films of the present invention.

## Claims

1. A multilayer film comprising a substrate layer of polymeric material having on at least one surface thereof a lacquer layer of polymeric material different from that of the substrate, the remote surface of said lacquer layer having a toner-receptive layer, characterised in that the lacquer layer comprises finely divided particles and the toner-receptive layer comprises a copolymer comprising styrene and/or a styrene derivative, and at least one ethylenically unsaturated comonomer copolymerisable therewith, the copolymer containing at least one free functional acid group, and in that the toner receptive layer has a thickness of not more than 2.5μm.

2. A multilayer film according to claim 1 wherein the at least one free functional acid group is a carboxyl group.

3. A multilayer film according to either one of claims 1 and 2 wherein the at least one ethylenically unsaturated comonomer is selected from acrylic acid, methacrylic acid, maleic acid and itaconic acid.

4. A multilayer film according to any one of the preceding claims wherein the toner-receptive layer additionally comprises an acrylic and/or methacrylic polymer.

5. A multilayer film according to any one of the preceding claims wherein the lacquer layer comprises a polyvinyl acetal resin.

6. A multilayer film according to claim 5 wherein the polyvinyl acetal resin comprises polyvinyl formal.

7. A multilayer film according to any one of the preceding claims wherein the lacquer layer comprises filler particles having an average particle size of 0.1 to 5 $\mu m$.

8. A multilayer film according to any one of the preceding claims wherein an additional adhesion-promoting layer is present between the substrate and lacquer layer, said adhesion-promoting layer comprising a polyester resin containing free sulphonate groups.

9. A multilayer film according to any one of the preceding claims wherein the substrate comprises a biaxially oriented film of polyethylene terephthalate.

10. A method of producing a multilayer film by forming a substrate layer of polymeric material, applying to at least one surface thereof a lacquer layer of polymeric material different from that of the substrate, and applying to the remote surface of said lacquer layer a toner-receptive layer, characterised in that the lacquer layer comprises finely divided particles and the toner-receptive layer comprises a copolymer comprising styrene and/or a styrene derivative, and at least one ethylenically unsaturated comonomer copolymerisable therewith, the copolymer containing at least one free functional acid group, and in that the toner receptive layer has a thickness of not more than 2.5$\mu m$.

**Patentansprüche**

1. Mehrschichtenfilm, umfassend eine Substratschicht eines Polymermaterials mit einer Lackschicht eines Polymermaterials, das sich von dem des Substrats unterscheidet, auf mindestens einer ihrer Oberflächen, wobei die entfernte Oberfläche der Lackschicht eine toner-aufnehmende Schicht aufweist, **dadurch gekennzeichnet, daß** die Lackschicht fein verteilte Teilchen umfaßt und die toner-aufnehmende Schicht ein Copolymer umfaßt, das Styrol und/oder ein Styrolderivat und mindestens ein ethylenisch ungesättigtes Comonomer, das damit copolymerisierbar ist, umfaßt, wobei das Copolymer mindestens eine freie funktionelle Säuregruppe enthält, und dadurch, daß die toneraufnehmende Schicht eine Dicke von nicht mehr als 2,5 $\mu m$ aufweist.

2. Mehrschichtenfilm nach Anspruch 1, **dadurch gekennzeichnet, daß** die mindestens eine freie funktionelle Säuregruppe eine Carboxylgruppe ist.

3. Mehrschichtenfilm nach einem der Ansprüche 1 und 2, **dadurch gekennzeichnet, daß** das mindestens eine ethylenisch ungesättigte Comonomer aus Acrylsäure, Methacrylsäure, Maleinsäure und Itaconsäure ausgewählt ist .

4. Mehrschichtenfilm nach einem der der vorstehenden Ansprüche, **dadurch gekennzeichnet, daß** die toner-aufnehmende Schicht zusätzlich ein Acryl- oder Methacrylpolymer umfaßt.

5. Mehrschichtenfilm nach einem der vorstehenden Ansprüche, **dadurch gekennzeichnet, daß** die Lackschicht ein Polyvinylacetalharz umfaßt.

6. Mehrschichtenfilm nach Anspruch 5, **dadurch gekennzeichnet, daß** das Polyvinylacetalharz Polyvinylformal umfaßt.

7. Mehrschichtenfilm nach einem der vorstehenden Ansprüche, **dadurch gekennzeichnet, daß** die Lackschicht Füllstoffteilchen mit einer mittleren Teilchengröße von 0,1 bis 5 $\mu m$ umfaßt.

8. Mehrschichtenfilm nach einem der vorstehenden Ansprüche, **dadurch gekennzeichnet, daß** zwischen dem Substrat und der Lackschicht eine zusätzliche haftvermittelnde Schicht vorhanden ist, wobei die haftvermittelnde Schicht ein Polyesterharz umfaßt, das freie Sulfonatgruppen enthält.

9. Mehrfachschichtenfilm nach einem der vorstehenden Ansprüche, **dadurch gekennzeichnet, daß** das Substrat einen biaxial orientierten Film aus Polyethylenterephthalat umfaßt.

10. Verfahren zur Herstellung eines Mehrschichtfilms durch Bildung einer Substratschicht aus Polymermaterial, Aufbringen einer Lackschicht aus Polymermaterial, das sich von dem des Substrats unterscheidet, auf mindestens einer Oberfläche davon, und Aufbringen einer toner-aufnehmenden Schicht auf die entfernte Oberfläche der Lackschicht, **dadurch gekennzeichnet, daß** die Lackschicht fein verteilte Teilchen umfaßt und die toner-aufnehmende Schicht ein Copolymer umfaßt, das Styrol und/oder ein Styrolderivat und mindestens ein ethylenisch ungesättigtes, damit copolymerisierbares Comonomer umfaßt, wobei das Copolymer mindestens eine freie funktionelle Säuregruppe enthält, und dadurch, daß die toner-aufnehmende Schicht eine Dicke von nicht mehr als 2,5 μm aufweist.

## Revendications

1. Film multicouche comprenant une couche de substrat formée d'un matériau polymère comportant, sur au moins une de ses surfaces, une couche de vernis constituée d'un matériau polymère différent de celui du substrat, la surface opposée de ladite couche de vernis ayant une couche réceptrice de toner, caractérisé en ce que la couche de vernis comprend des particules finement divisées, et la couche réceptrice de toner comprend un copolymère constitué de styrène ou d'un dérivé du styrène, et au moins un comonomère éthyléniquement insaturé copolymérisable avec celui-ci, ledit copolymère contenant au moins un groupe d'acide fonctionnel libre, et en ce que la couche réceptrice de toner a une épaisseur de pas plus de 2,5 μm.

2. Film multicouche selon la revendication 1, dans lequel le groupe minimal d'acide fonctionnel libre est un groupe carboxyle.

3. Film multicouche selon la revendication 1 ou 2, dans lequel le comonomère minimal éthyléniquement insaturé est choisi parmi l'acide acrylique, l'acide méthacrylique, l'acide maléique et l'acide itaconique.

4. Film multicouche selon l'une quelconque des revendications précédentes, dans lequel la couche réceptrice de toner comprend, en outre, un polymère acrylique et/ou méthacrylique.

5. Film multicouche selon l'une quelconque des revendications précédentes, dans lequel la couche de vernis comprend une résine de polyvinylacétal.

6. Film multicouche selon la revendication 5, dans lequel la résine de polyvinylacétal comprend du polyvinylformal.

7. Film multicouche selon l'une quelconque des revendications précédentes, dans lequel la couche de vernis comprend des particules de charge ayant une dimension moyenne de 0,1 à 5 μm.

8. Film multicouche selon l'une quelconque des revendications précédentes, dans lequel une couche supplémentaire favorisant l'adhérence est présente entre le substrat et la couche de vernis, ladite couche favorisant l'adhérence comprenant une résine de polyester contenant plusieurs groupes sulfonates libres.

9. Film multicouche selon l'une quelconque des revendications précédentes, dans lequel le substrat comprend un film de téréphtalate de polyéthylène orienté biaxialement.

10. Procédé de fabrication d'un film multicouche comprenant la formation d'une couche de substrat en matériau polymère, l'application, sur au moins une surface de celui-ci, d'une couche de vernis formée d'un matériau polymère différent de celui du substrat, et l'application d'une couche réceptrice de toner sur la surface opposée de ladite couche de vernis, caractérisé en ce que la couche de vernis comprend des particules finement divisées, et la couche réceptrice de toner comprend un copolymère constitué de styrène et/ou d'un dérivé du styrène, et au moins un comonomère éthyléniquement insaturé copolymérisable avec celui-ci, ledit copolymère contenant au moins un groupe d'acide fonctionnel libre, et en ce que la couche réceptrice de toner a une épaisseur de pas plus de 2,5 μm.

## Fig.1.

## Fig.2.